# EUROPEAN PATENT APPLICATION

(11) **EP 2 868 545 A1**
(43) Date of publication of application: **06.05.2015**
(21) Application number: 12880010.9
(22) Date of filing: 27.06.2012
(51) Int. Cl.: B61D 27/00, B60H 1/26

(54) **RAILWAY-VEHICLE TOTAL-HEAT-EXCHANGE VENTILATION SYSTEM**

(71) Applicant: Mitsubishi Electric Corporation, Tokyo 100-8310 (JP)
(72) Inventor: YUASA, Hiroyuki, Tokyo 100-8310 (JP); KAWASHIMA, Koji, Tokyo 100-8310 (JP); KINGETSU, Shingo, Tokyo 100-8310 (JP)
(74) Representative: Sajda, Wolf E.
(86) International application number: PCT/JP2012/004144
(87) International publication number: WO 2014/002137

(57) **Abstract**

The present invention is to realize a railway-car total heat exchange ventilation system for railway-car air-conditioning ventilation equipment, which is capable of maintaining comfort inside the car that would be impaired by rapid variations in the external air temperature and variations in the temperature inside the car, or the like, accompanied by the change in the number of people on board caused by passengers getting on/off at a station, or the like. In the total heat exchanger control unit of the control device that controls the total heat exchanger, a value of heat load outside the car, which is calculated on the basis of the difference between the external air temperature detected by the car-exterior temperature detection sensor and the temperature inside the car detected by the car-interior temperature detection sensor, is compared with a value of heat load inside the car, which is calculated by multiplying the amount of average heat generation per passenger (approximately 0.115 kW) by the current number of people on board inside the car calculated from the passenger weight detected by the passenger weight detection device, and then a variation in a future temperature inside the car is predicted and switching between a heat exchange operation of the heat exchanger and a normal operation is carried out on the basis of the predicted result, so that the comfort inside the car is maintained.

## Description

### Technical Field

The invention relates to a total heat exchange ventilation system for a railway car.

### Background Art

In conventional ventilation and air-conditioning equipment, intake ventilation and exhaust ventilation are carried out at the same time while a heat exchange is carried out by installing a total heat exchanger in intake and exhaust air ducts of air-conditioning equipment, and a bypass air duct is installed in each of intake and exhaust ducts, and thus a heat exchange operation and a normal ventilation operation where the heat exchange process is not performed, are controlled (for example, refer to Patent Document 1).

### Prior Art Document

### Patent Document

Patent Document 1: Japanese Unexamined Patent Application Publication JP-A-2009-168 367 (pages 4 to 5, FIG. 1)

### Summary of the Invention

### Problems to be Solved by the Invention

In a case where a heating operation is carried out by conventional ventilation and air-conditioning equipment, the equipment is controlled in such a way that, a comparison between an outdoor temperature and an indoor temperature is made, and if the outdoor temperature is lower than the indoor temperature and the temperature difference between them is large, a heat exchange operation is carried out, and if the temperature difference between them is small or the temperature is higher than the indoor temperature, a normal ventilation operation is carried out.

When the equipment is applied to a railway car, for example, it is likely that the temperature inside the car fluctuates owing to frequent exchanges of people on board caused by passengers getting on/off at a station, and in a situation where the operation switching is performed on the basis of the comparison between the temperatures inside and outside the car, the equipment is controlled in such a way that, after passengers getting on/off, an operation based on the temperature inside the car before the change in the number of people on board is continued for a while, and the operation switching is performed after variations in the temperature inside the car have been detected. Therefore, a problem arises that comfort inside the car is impaired until the variations in the temperature inside the car are detected.

In conventional ventilation and air-conditioning equipment, when the temperature outside the car is high, a bypass air duct is often installed in either one of the intake air duct or the exhaust air duct in order to avoid a rise in the intake air temperature. In Patent Document 1, although the bypass air ducts are installed in both of the intake and exhaust air ducts, both of the bypass air ducts are utilized only when a cooling coil is driven at a cooling operation in summer and either one of them is only utilized in a heating operation.

In a railway car, in a case where either one of the intake and exhaust air is bypassed, there is a possibility that a pressure difference is generated between inside and outside the car. In an automatic door installed in a railway car for passengers getting on/off, opening and closing control is performed using pressure, and therefore a problem arises that the door cannot be normally opened and closed when a pressure difference between inside and outside the car is generated.

The present invention has been made to solve the above-described problems, and is to realize a total heat exchange ventilation system for a railway car that, for example, maintains comfort inside a car that would be impaired by the variations in the temperature inside the car accompanied by a change in the number of people on board, and avoids the generation of the pressure difference between inside and outside the car.

### Means for Solving the Problems

A railway-car total heat exchange ventilation system according to the present invention includes:
an intake air duct through which air outside a car is introduced to the inside of the car;
an exhaust air duct through which air inside the car is discharged to the outside of the car;
a total heat exchanger that exchanges heat between outside air introduced through the intake air duct and air inside the car discharged through the exhaust air duct;
bypass air ducts that are installed in each of the intake air duct and the exhaust air duct and that bypass the total heat exchanger; and
a control means that controls an operation of the total heat exchanger, wherein the control means predicts a variation in a future temperature inside the car, and if a rise in the future temperature inside the car is not expected, a heat exchange operation is carried out without the air passing through the bypass air ducts, and if a rise in the future temperature inside the car is expected, a normal ventilation operation is carried out with the air passing through the bypass air ducts.

### Effect of the Invention

In the present invention, by predicting variations in a future temperature inside a car that occurs owing to variations in the external air caused by traveling from a warm region to a cool region, etc., and variations in the number of passengers getting on/off at a station, etc., the switching between a heat exchange operation and a normal ventilation operation is performed.

For example, in a case where the number of people on board varies, by avoiding a delay in an adjustment of the temperature inside the car that is caused by a brief continued operation based on the temperature inside the car before the change in the number of passengers even after completion of getting on/off, the comfort inside the car can be maintained.

### Brief Description of the Drawings

- FIG. 1: is a block diagram showing an overall structure of a total heat exchange ventilation system according to Embodiment 1 of the present invention;
- FIG. 2: is a block diagram showing a structure of a total heat exchanger according to Embodiment 1 of the present invention;
- FIG. 3: is a block diagram showing a structure of a control device according to Embodiment 1 of the present invention; and
- FIG. 4: is a flowchart showing a procedure for a control process according to Embodiment 1 of the present invention.

### Embodiments for Carrying out the Invention

### Embodiment 1

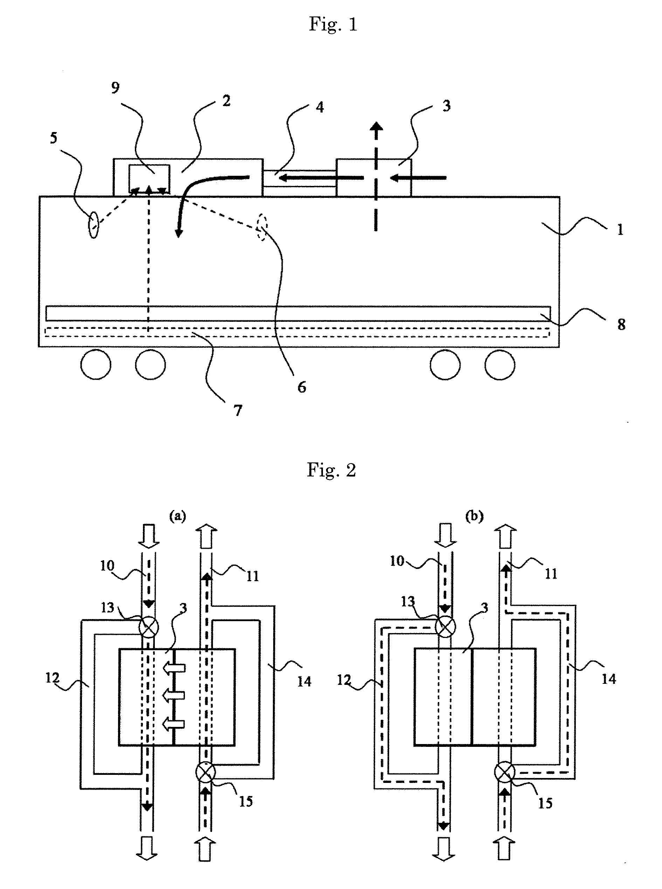

FIG. 1 is a block diagram showing a total heat exchange ventilation system according to Embodiment 1 of the present invention. The total heat exchange ventilation system includes an air conditioning apparatus 2 that adjusts a temperature within a railway car 1; a total heat exchanger 3 that exchanges heat between external air and air inside the car; a duct 4 that connects the air conditioning apparatus 2 with the total heat exchanger 3; a car-exterior temperature detection sensor 5 that is installed on an external surface of the car; a car-interior temperature detection sensor 6 that is installed inside the car; a passenger weight detection device 7 installed in a lower portion of the car; a heating device 8 that heats the inside of the car; and a control device 9 that controls an operation of the total heat exchanger 3.

FIG. 2 is a block diagram of the total heat exchanger 3. The total heat exchanger 3 includes an intake air duct 10 through which external fresh air is introduced to the air conditioning apparatus 2, and an exhaust air duct 11 through which warmed air inside the car is discharged into the atmosphere.

The intake air duct 10 includes a bypass air duct 12 through which the fresh air is introduced into the air conditioning apparatus 2 without passing through the heat exchange in the total heat exchanger 3, and a bypass valve 13 that switches between the intake air duct 10 and the bypass air duct 12.

The exhaust air duct 11 includes a bypass air duct 14 through which the air inside the car is introduced into the atmosphere without passing through the heat exchange in the total heat exchanger 3, and a bypass valve 15 that switches between the intake air duct 11 and the bypass air duct 14.

By opening and closing the bypass valve 13 and the bypass valve 15, the operation is switchable between the heat exchange operation without the air passing through the bypass air duct 12 and the bypass air duct 14 and the normal ventilation operation with the air passing through the bypass air duct 12 and the bypass air duct 14.

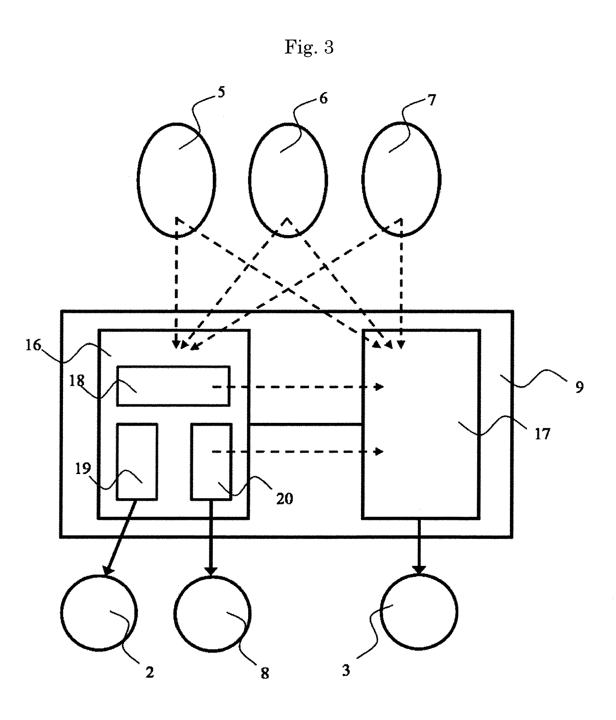

FIG. 3 is a block diagram of the control device 9. The control device 9 includes an air conditioning apparatus control unit 16 that controls an operation of the air conditioning apparatus 2, and a total heat exchanger control unit 17 that controls an operation of the total heat exchanger 3.

The air conditioning apparatus control unit 16 includes a car-interior temperature setting unit 18 that sets a target temperature of the air conditioning inside the car, a heating control unit 19 that controls to keep the target temperature, and a heating control unit 20 that controls an operation of the heating device 8.

The air conditioning apparatus control unit 16 and the total heat exchanger control unit 17 each obtain information on the temperature outside the car, the temperature inside the car, and the number of people on board from the car-exterior temperature detection sensor 5, the car-interior temperature detection sensor 6, and the passenger weight detection device 7, respectively.

Further, the total heat exchanger control unit 17 obtains a preset temperature inside the car from the car-interior temperature setting unit 18, and information on whether the heating device 8 is in an operating state or a non-operating state from the heating control unit 20.

Next, the operation will be described using FIG. 2 and FIG. 3. FIG. 2(a) shows an air flow during the heat exchange operation, and FIG. 2(b) shows an air flow during the normal ventilation operation. When the heat exchange operation is carried out, external fresh air is introduced into the total heat exchanger 3 through the intake air duct 10 and at the same time, warmed air inside the car is introduced into the total heat exchanger 3 through the exhaust air duct 11.

After heating up by a heat exchange with the warmed air inside the car in the total heat exchanger 3, the external fresh air is fed into the air conditioning apparatus 2 through the duct 4, and after cooling down by a heat exchange with the external fresh air, the warmed air inside the car is discharged into the atmosphere.

In contrast, when the normal ventilation operation is carried out, the fresh air is introduced into the bypass air duct 12 by switching the bypass valve 13 in the intake air duct 10 to the bypass air duct 12 and at the same time, the air inside the car is introduced into the bypass air duct 14 by switching the bypass valve 15 in the exhaust air duct 11 to the bypass air duct 14, so that the normal ventilation operation is carried out while avoiding the heat exchange in the total heat exchanger 3.

The switching between the heat exchange operation and the normal ventilation operation is performed by the total heat exchanger control unit 17 in the control device 9. The total heat exchanger control unit 17 compares the temperature outside the car detected by the car-exterior temperature detection sensor 5 with the preset temperature inside the car obtained from the car-interior temperature setting unit 18, and if the temperature outside the car is equal to or larger than the preset temperature, heating up the intake air is not needed, so that the normal ventilation operation is carried out.

Next, an operation in the case where the temperature outside the car is lower than the preset temperature inside the car will be described. The total heat exchanger control unit 17 obtains, from the heating control unit 20, information on whether the heating device 8 is in an operating state or a non-operating state, and when the heating device 8 is in the non-operating state, which means the inside of the car is sufficiently warmed up, the normal ventilation operation is carried out.

In contrast, when the heating device 8 is in operation, after estimating future temperature variations inside the car, which one of the heat exchange operation and the normal ventilation operation is to be carried out, is determined.

A total heat loss (heat load outside the car) from the inside of the car by the ventilation load is calculated on the basis of the temperature difference between the temperature outside the car detected by the car-exterior temperature detection sensor 5 and the temperature inside the car detected by the car-interior temperature sensor 6, and a total amount of heat generated and accumulated inside the car (heat load inside the car) is calculated by multiplying the number of people on board calculated from the passenger weight detected by the passenger weight detection device 7, by the amount of average heat generation per person (approximately 0.115 kW), and then the variations of the future temperature inside the car is predicted on the basis of a comparison between the heat load outside the car and the heat load inside the car.

A rise in the future temperature inside the car is not expected if the heat load inside the car is smaller than the heat load outside the car, and thus the heat exchange operation is carried out. A rise in the future temperature inside the car is expected if the heat load inside the car is equal to or larger than the heat load outside the car, and thus the normal ventilation operation is carried out.

Here, the future temperature inside the car is defined to be a temperature inside the car after a certain period of time during which the temperature rises and falls owing to the change in the number of passengers getting on/off at a station. The heat load inside the car increases when the number of people on board increases, and it decreases when the number of passengers decreases.

In contrast, the heat load outside the car (ventilation load) increases when the difference between the temperatures outside and inside the car is large, and it decreases when the difference between the temperatures outside and inside the car is small, or the temperature outside the car is larger than the temperature inside the car.

The control device 9, after executing an operation switching process of the total heat exchanger 3, starts again a determination process of whether or not the operation switching is necessary. However, if the operation switching occurs frequently, the control becomes unstable, causing a deterioration of the exchanger. In order to prevent such a hunting in the control, after the operation switching of the total heat exchanger 3, the process is withheld for a certain period of time (for example, for 5 minutes).

However, when a change in the number of people on board due to a stop at a station is detected during the withholding period of time, the variations in the heat load inside the car are expected, and thus the withheld state of the process is released after the number of people on board stabilizes.

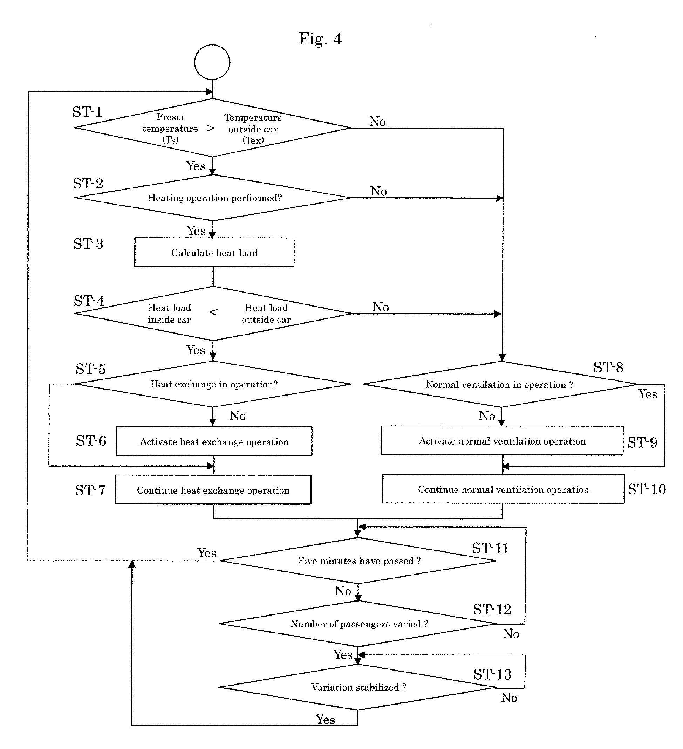

FIG. 4 is a flow chart showing a procedure in the total heat exchange ventilation system according to Embodiment 1. When the operation of the total heat exchange ventilation system is started, the control device 9 compares the preset temperature inside the car Ts and the temperature outside the car Tex (Step ST-1).

Based on the comparison result, when the temperature outside the car Tex is lower than the preset temperature inside the car Ts, the control device checks whether or not the heating device 8 is currently performing the heating operation (Step ST-2), in order to start the heat exchange operation.

When the temperature outside the car Tex is larger than or equal to the preset temperature inside the car, the control device checks whether or not the total heat exchanger 3 is currently performing the normal exchange operation (Step ST-8), in order to start the normal ventilation operation.

When the heating device 8 is performing the heating operation in the case where the temperature outside the car Tex is lower than the preset temperature inside the car Ts, the heat load inside the car and the heat load outside the car are calculated in order to predict variations in the future temperature inside the car (Step ST-3).

In contrast, when the heating device is in the non-operating state, which means the inside of the car is sufficiently warmed up, the control device checks whether or not the total heat exchanger 3 is now performing the normal exchange operation (Step ST-8), for the purpose of starting the normal ventilation operation.

The heat load inside the car used for variation predictions in the temperature inside the car is calculated by multiplying the average heat generation per passenger (0.115 kW) by the number of people on board inside the car calculated from the passenger weight detected by the passenger weight detection device 7.

In contrast, the heat load outside the car is calculated by multiplying each of setting values such as an air density, an external airflow amount, and a specific air enthalpy that have been preset, by the temperature difference between the temperature inside and outside the car. Here, the setting values for the air density, the external airflow amount, and the specific air enthalpy are different for each car.

Base on the comparison between the heat load outside the car and the heal load inside the car, it is expected that the temperature inside the car will not increase when the heat load outside the car is larger than the heat load inside the car, and thus the operating state of the total heat exchanger 3 is checked for the purpose of performing the heat exchange operation (Step ST-5).

When the heat exchanger 3 is performing the normal ventilation operation, the heat exchange operation is activated (Step ST-6), and when the heat exchange operation is being performed, the heat exchange operation is continued (Step ST-7).

In contrast, it is expected that the future temperature inside the car will increase when the heat load outside the car is equal to or smaller than the heat load inside the car, and thus the operating state of the total heat exchanger 3 is checked for the purpose of performing the normal ventilation operation (Step ST-8).

The normal ventilation operation is activated (Step ST-9) when the heat exchange operation is being performed, and the normal ventilation operation is continued (Step ST-10) when the normal ventilation operation is being performed.

When a next operation switching process is started just after switching the operation of the total heat exchanger 3, frequent operation switching of the total heat exchanger 3 occurs depending on the determination result, and thus the operating condition becomes unstable, causing deterioration of the exchanger.

Therefore, after switching the operation of the total heat exchanger 3, the operation switching process is withheld for a certain period of time (for example, for 5 minutes), and hold the current operating status (Step ST-11).

However, when the car arrives at a station while the operation switching is withheld, variations in the temperature inside the car are assumed owing to the change in the number of passengers, and thus the withheld state of the operation of the total heat exchanger 3 is released.

When the passenger weight detection device 7 detects the change in the number of passengers, the current operating condition is held until the variation is suppressed (Step ST-12), and after the passengers finish getting on/off and the number of passengers detected by the passenger weight detection device 7 stabilizes, the withheld state of the operation switching process is released (Step ST-13).

According to Embodiment 1, even in a situation where the temperature outside the car is lower than the preset temperature inside the car and the heat exchange operation of the total heat exchanger 3 may be selected, the normal ventilation operation is selected for the case where a temperature rise inside the car is expected owing to an increase in the number of people on board inside the car, so that the comfort inside the car can be maintained.

Further, in the normal ventilation operation, selecting the bypass air duct 12 of the intake air duct 10 and the bypass air duct 14 of the exhaust air duct 11 at the same time avoids a generation of a pressure difference between the external pressure and the pressure inside the car, so that a malfunction during the opening and closing of the door caused by the pressure difference between inside and outside the car can be avoided.

Furthermore, after the switching between the heat exchange operation and the normal ventilation operation, the process is withheld for a certain period of time, and thus the operating condition of total heat exchanger 3 becomes stable, so that early deterioration of the apparatus can be avoided.

In addition, when the change in the number of people on board occurs owing to a stop at a station during the withholding period of time, the control of the operation switching is performed by promptly releasing the withheld state, so that the comfort inside the car can be maintained.

Note that, the withholding period of time for the operation switching is not limited to 5 minutes, and an optimum period of time is set depending on the operational situation of the railway car and the distance between stations, and thus an efficient operation can be realized.

### Embodiment 2

As Embodiment 2 of the present invention, an embodiment will be described in which a car body heat conduction load is also calculated when the heat load outside the car is calculated. In the procedure (Step ST-3) for calculating the heat load inside the car and the heat load outside the car in the flow chart of FIG. 4 for the total heat exchange ventilation system shown in Embodiment 1, a calculated result of the car heat conduction load is added to the heat load outside the car.

The system configuration and the processing procedure in the control device 9 are the same as those in Embodiment 1. Therefore, it is noted that parts common with those in Embodiment 1 are denoted by the same reference numerals as those used in Embodiment 1, and descriptions thereof will be omitted.

When the heat load outside the car is calculated, the heat loss from the inside of the car to the outside is different in each car, depending on the car body structure and materials that constitute the car body. Therefore, a calculated result of the car heat conduction load is added to the calculated result of the heat load outside the car described in Embodiment 1. The car heat conduction load is calculated by multiplying the temperature difference between the temperatures inside and outside the car by thermal conductivity assigned for each car.

According to Embodiment 2, when the heat load outside the car is compared with the heat load inside the car, adding the value of the car heat conduction load to the value of the heat load outside the car improves the calculation accuracy for the heat lost from the inside of the car, and thus the accuracy in the control can be improved.

### Embodiment 3

As Embodiment 3 of the present invention, an embodiment will be described in which a heating load of devices installed inside the car (various display devices and a driving device, etc.) is also calculated when the heat load inside the car is calculated. In the procedure (Step ST-3) for calculating the heat load inside the car and the heat load outside the car in the flow chart of FIG. 4 for the total heat exchange ventilation system shown in Embodiment 1, a calculated result of the heating load of components inside the car is added to the heat load inside the car.

The system configuration and the processing procedure in the control device 9 are the same as those in Embodiment 1. Therefore, it is noted that parts common with those in Embodiment 1 are denoted by the same reference numerals as those used in Embodiment 1, and descriptions thereof will be omitted.

When the heat load inside the car is calculated, there exists the amount of heat generated from various devices installed in the car. For example, the amount of heat generated inside the car is different depending on a car body such as the lead car including a driver's seat or a car including liquid display devices installed, etc.

Therefore, a calculated result of the heating load of components inside the car is added to the calculated result of the heat load inside the car described in Embodiment 1. The heating load of components inside the car is the total amount of the heat generated from the plurality of devices inside the car, the value of which is predetermined for each car.

According to Embodiment 3, when the heat load outside the car is compared with the heat load inside the car, adding, to the heat load inside the car, the heating load of components inside the car, which is different for each car, improves the accuracy in the amount of heat generated from the inside of the car, and thus the accuracy in the control can be improved.

Note that, adding the heat conduction load of the car body adopted in Embodiment 2 to the heat load outside the car in Embodiment 3 improves the accuracy in the calculated result in both of the heat load outside the car and the heat load inside the car, and thus the accuracy in the control can be further improved.

### Explanation of reference characters

- 1: railway car
- 2: air conditioning apparatus
- 3: total heat exchanger
- 5: car-exterior temperature detection sensor
- 4: duct
- 6: car-interior temperature detection sensor
- 7: passenger weight detection device
- 8: heating device
- 9: control device
- 10: intake air duct
- 11: exhaust air duct
- 12: intake air bypass duct
- 13: intake air bypass valve
- 14: exhaust air bypass duct
- 15: exhaust air bypass valve
- 16: air conditioning apparatus control unit
- 17: total heat exchanger control unit
- 18: car-interior temperature setting unit
- 19: heating control unit
- 20: heating control unit

## Claims

1. A railway-car total heat exchange ventilation system comprising:
- an intake air duct through which air outside a car can be introduced to the inside of the car;
- an exhaust air duct through which air inside the car can be discharged to the outside of the car;
- a total heat exchanger that is adapted to exchange heat between outside air introduced through the intake air duct and air inside the car discharged through the exhaust air duct;
- bypass air ducts that are installed in each of the intake air duct and the exhaust air duct and that are adapted to bypass the total heat exchanger; and
- a control means that is adapted to control an operation of the total heat exchanger, wherein
the control means is adapted to predict a variation in a future temperature inside the car when a heating operation is carried out, and if a rise in the future temperature inside the car is not expected, a heat exchange operation is carried out without the air passing through the bypass air ducts, and if a rise in the future temperature inside the car is expected, a normal ventilation operation is carried out with the air passing through the bypass air ducts.

2. The railway-car total heat exchange ventilation system according to claim 1, further comprising:
- a car-exterior temperature measurement means which is adapted to detect a temperature outside the car;
- a car-interior temperature measurement means which is adapted to detect a temperature inside the car; and
- a number-of-passenger measurement means which is adapted to detect the number of people on board in each car, wherein
a variation in the future temperature inside the car is predicted in the control means by calculating heat loads inside and outside the car on the basis of detection results from the car-exterior temperature measurement means, the car-interior temperature measurement means, and the number-of-passenger measurement means.

3. The railway-car total heat exchange ventilation system according to claim 2,
wherein the variation in the future temperature inside the car is predicted in the control means by adding a calculation result of a heat conduction load of the car to the heat load outside the car, together with the heat loads inside and outside the car calculated on the basis of detection results from the car-exterior temperature measurement means, the car-interior temperature measurement means, and the number-of-passenger measurement means.

4. The railway-car total heat exchange ventilation system according to claim 2,
wherein the variation of the future temperature inside the car is predicted in the control means by adding a calculation result of a heating load of components inside the car to the heat load inside the car, together with the heat loads inside and outside the car calculated on the basis of detection results from the car-exterior temperature measurement means, the car-interior temperature measurement means, and the number-of-passenger measurement means.

5. The railway-car total heat exchange ventilation system according to any one of claims 1 to 4,
wherein, during the normal ventilation operation, bypass valves can be opened by the control means, and intake air and exhaust air are ventilated at the same time through bypass air ducts.

6. The railway-car total heat exchange ventilation system according to any one of claims 1 to 5,
wherein, after executing a switching process between the heat exchange operation and the normal ventilation operation, the control means is adapted to withhold the process for a certain period of time.

7. The railway-car total heat exchange ventilation system according to claim 6,
wherein, after executing the switching process between the heat exchange operation and the normal ventilation operation and withholding the process for a certain period of time, the control means is adapted to release the withheld state of the process if a change occurring in the number of people on board is detected by the number-of-passenger measurement means.
